# EUROPEAN PATENT APPLICATION

(11) **EP 1 328 087 A1**
(43) Date of publication of application: **16.07.2003**
(21) Application number: 02360024.0
(22) Date of filing: 11.01.2002
(51) Int. Cl.: H04L 12/28, H04Q 7/38

(54) **Method for communicating messages within a wireless communication network involving periodic measurements of channel characteristics performed with a frequency dependent on the speed of the mobile unit and communication network implementing said method**

(71) Applicant: ALCATEL, 75008 Paris (FR)
(72) Inventor: KaminskiStephen, D-75365 Calw (DE); Bakker Hajo, D-71735 Eberdingen (DE)
(74) Representative: Duhme, Torsten

(57) **Abstract**

The present invention relates to a method for communicating messages within a wireless communication network having a plurality of wireless terminals (12-20), in particular a wireless LAN and more particularly a HIPERLAN network, said method comprising the steps of:
- providing a plurality of wireless communication channels (30, 36),
- selecting one of said wireless communication channels (30) for transmitting said messages between at least two of said wireless terminals (16, 18),
- measuring channel characteristics in non-selected ones (36) of said wireless communication channels in at least one (16) of said at least two wireless terminals (16, 18), and
- switching to one of said non-selected communication channels (36) depending on said channel characteristics measured.

The inventive method is characterized in that said step of measuring is executed in variable time intervals depending on a mobility (22) of said at least one wireless terminal (16). The invention further relates to a corresponding communication network and to corresponding wireless terminals (Fig. 1).

## Description

The present invention relates to a method for communicating messages within a wireless communication network having a plurality of wireless terminals, in particular a wireless LAN and more particularly a HIPERLAN network, said method comprising the steps of:
- providing a plurality of wireless communication channels,
- selecting one of said wireless communication channels for transmitting said messages between at least two of said wireless terminals,
- measuring channel characteristics in non-selected ones of said wireless communication channels in at least one of said at least two wireless terminals, and
- switching to one of said non-selected communication channels depending on said channel characteristics measured.

The invention further relates to a communication network, in particular a wireless LAN and more particularly a HIPERLAN communication network, having a plurality of wireless communication channels and a plurality of wireless terminals each connected to at least one of said wireless communication channels, wherein each wireless terminal comprises a receiver for receiving radio signals, a transmitter for transmitting radio signals, and a channel selector for selecting one of said wireless communication channels to be connected with, wherein said receiver is capable of measuring channel characteristics in non-selected ones of said wireless communication channels, and wherein said channel selector switches to a non-selected communication channel depending on said channel characteristics measured.

Such a method and a corresponding communication network are known, for instance, from the so-called HIPERLAN standard, which is presently emerging in Europe. The invention is preferably directed to a HIPERLAN network, but it is not limited thereto. The invention can also be used in other networks, such as IEEE 802.11 networks, HiSWAN networks, BLUETOOTH networks, and even in DECT, GSM, or UMTS networks.

In a wireless communication network, messages are transmitted and received across wireless communication channels. Usually, several communication channels are distinguished from one another by the signal frequencies used. Different communication channels are particularly used in order to establish communication in a wireless network having a plurality of access points. In terms of the present invention, an access point is a mobile or a fixed terminal that is primary to "simple" mobile terminals with respect to organizing and controlling the communication. For a HIPERLAN network, the term "access point" is generally known to those skilled in the art. In other networks, access points might be called "base stations" or the like.

In a wireless network employing several access points, usually each access point covers a certain spatial area, and it controls and organizes communication of mobile terminals presently located in that area. For this purpose, the mobile terminals usually have to be logged on to said specific access point.

When a mobile terminal is moved around while being connected to a wireless network via an access point, it might happen that said wireless terminal leaves the area that can be covered by said access point. In such a case, the mobile terminal has to log on to a new access point in order to maintain the connection to the wireless communication network. Switching from one access point to another due to movement of the wireless terminal is usually called a handover or a handoff.

Since different access points usually operate with different signal frequencies, i.e. on different communication channels, a handover requires a change of the communication channel used.

Several algorithms are known to those skilled in the art in order to realize such a change. In every case, however, a decision has to be made when a switch to a new communication channel is feasible and useful. As a criterion for this decision, channel characteristics, especially frequency characteristics, in non-selected communication channels are observed in the wireless terminal, and a switch to a new communication channel takes place, if such new channel provides better channel characteristics as the present one.

Moreover, it is sometimes useful to change the communication channel used even without a handover from one access point to another. For instance, if frequency characteristics in the selected communication channel deteriorate due to external influences, such as interference with external jammers or deterioration caused by weather influences, it might also be useful to switch the selected communication channel. For this purpose, and by way of example, the access point(s) according to HIPERLAN standard can instruct terminals to make so-called Dynamic Frequency Selection (DFS) measurements. Even the access points themselves can conduct DFS measurements. If such measurements reveal that a more appropriate communication channel is available, a channel switch is executed.

Finally, there are applications in communication networks where an access point requires measurement information from a wireless terminal for other reasons, such as for providing Location Based Services (LBS) in a GSM network. I will be readily understood that such information also requires measurements of channel characteristics in the wireless terminal.

Said channel characteristics can easily be measured by means of the receiver which is included in any wireless terminal. However, such measurements collide with the main task of the receiver, namely receiving messages across the selected communication channel.

A possible solution to solve this conflict is to provide a second receiver, one for receiving messages and another one for measuring channel characteristics in non-selected communication channels. However, such a solution is costly and therefore not well accepted for mass products.

An alternative solution is a time-sharing between these two conflicting tasks of the receiver. However, time sharing effects the efficiency of the communication in terms of throughput of messages. This applies particularly to HIPERLAN networks, where the receiver of a wireless terminal can be busy with receiving messages for long and nearly continuous periods of time.

It is therefore an object of the present invention to provide a method and a communication network as mentioned at the outset having an improved efficiency of message communication without the need to employ a second receiver for measuring channel characteristics in non-selected communication channels.

This object is achieved by a method as mentioned at the outset wherein said step of measuring is executed in variable time intervals depending on a mobility of said at least one wireless terminal.

The object is further achieved by a communication network as mentioned at the outset, wherein each wireless terminal further comprises a receiver controller that controls said receiver to measure said channel characteristics in variable time intervals depending on a mobility of each respective wireless terminal.

The inventive solution follows the approach of time sharing the resources of a single receiver included in a wireless terminal. According to the invention, however, the step of measuring is not executed in the same frequency under all circumstances. The invention rather implements the idea to adapt the frequency of measurements to the probability that a change of a communication channel is required. The lower the probability for a change is, the less often a measurement will take place.

In order to easily estimate the probability, a mobility, and in particular a velocity of movement, of the respective wireless terminal is evaluated. The more a wireless terminal moves around, the higher is the probability that a change of the communication channel is useful. For a wireless terminal that does not move around, such as a stationary server station or maybe a VCR in a HIPERLAN network, it is rarely necessary to switch the communication channel. For such a terminal, the frequency of measurements can be set very low providing an increased amount of time for receiving messages. In contrast, a handheld computer might be moved around very often and quickly. For such a device, it is useful to make frequent measurements in order to always allow the selection of the best communication channel available.

The inventive method is an easy and inexpensive way to improve the efficiency of the communication network, since receiver resources can be used in an optimum way. The main task of the receiver, i.e. receiving messages, is not blocked for "unnecessary" measurements, when the probability of channel switchings is rather low. On the other hand, terminals quickly moving around are guaranteed to switch to a more suitable communication channel at nearly any time. The improvement of efficiency is not accompanied by considerable additional receiver costs. Therefore, the above object is completely achieved.

In a preferred embodiment of the invention, said step of measuring is executed the more often the higher said mobility is.

This feature follows the above-mentioned considerations, since the probability of a useful change of the communication channel goes along with the degree of mobility. Thus, this feature particularly contributes to an increase in communication efficiency.

In another embodiment of the invention, said time intervals are varied depending on a parameter value that can be set by a user of said at least one wireless terminal.

In a simple but already effective example, the user can choose between two parameter values, namely either "fixed" or "mobile". If he chooses "fixed", measurements will be carried out rarely if at all. If he chooses "mobile", measurements will be carried out often. On the one hand, just these two options already provide an improvement of communication efficiency, since the frequency of measurements in fixed terminals is much lower than in mobile terminals. The number of time wasting and unnecessary measurements is reduced. On the other hand, these two options are very easy to realize and implement without an excessive evaluation algorithm. It will be appreciated by those skilled in the art that more parameter options can also be realized with low effort.

In another embodiment of the invention, said time intervals are varied depending on a fading rate estimated by said at least one wireless terminal.

A low fading rate corresponds to stable conditions in the communication environment, and stable conditions eliminate the need for frequent measurements. Therefore, estimation of the fading rate is also a well suited input for adapting the frequency of measurements. This feature particularly provides the advantage that it is not related to a user's decision which might be wrong or overcome. Additionally, the time intervals are varied in a close relationship to actual conditions in the communication environment.

According to another preferred embodiment, said fading rate is estimated by observing a signal strength of message signals received across the selected communication channel.

Alternatively, a fading rate could be estimated from a user selectable parameter, in particular a parameter indicating an expected maximum velocity of movement. The preferred feature, however, is even more related to the actual conditions in the communication environment. Moreover, the signal strength of the message signals received is inherently measured by many receiver designs, such that the true fading rate can be estimated without considerable additional costs and effort. As in the previous embodiment, big changes in the signal strength of the received message signals preferably cause short time intervals between measurements in non-selected communication channels.

According to another embodiment, said time intervals are varied depending on an amount of user data which is to be received or transmitted by said at least one wireless terminal.

This feature again considerably improves the communication efficiency, since the frequency of measurements can be reduced drastically, if high amounts of user data have to be communicated (received or transmitted), such as during a file transfer. The terminal can concentrate on its main task of communicating messages without being interrupted by "luxury" measurements in non-selected communication channels. On the other hand, if the amount of user data is low, the terminal has enough time for measurements.

In another embodiment, said step of switching includes a change of a carrier frequency used.

This feature specifies a preferred application of the invention, although a switch of the communication channel not necessarily is accompanied by a change of the carrier frequency used. Basically, communication channels can also be distinguished by other parameters, and the invention is generally not excluded therefrom. However, the invention is particularly useful in combination with the above feature, since the receiver is occupied with measuring channel characteristics in competition to its main task of receiving messages.

In another embodiment, said step of selecting includes a selection of an access point for establishing said communication link, and said step of switching includes a change of the access point selected.

This feature is particularly useful for communication networks involving several access points which can be selectively logged on from wireless terminals. In such an environment, measurement in non-selected communication channels is very useful, if not required, in order to ensure a smooth handover from one access point to another. The invention, however, is generally not limited to situations or environments where access points have to be changed.

In another embodiment, said step of measuring is executed on an instruction issued by an access point.

This feature is particularly directed to situations in which channel characteristic measurements are executed on the instruction or request of said access point, for instance as Dynamic Frequency Selection (DFS) Measurements in HIPERLAN networks, or with regard to Location Based Services in GSM. It improves communication efficiency considerably if said access point also observes the actual communication demand of said wireless terminals when instructing such measurements. Preferably, the mobility factor of each respective wireless terminal is send to said access point, in particular during a log on procedure. It will be understood that the access point preferably also considers the mobility of its own with regard to instructing terminals to execute measurements, and with regard to carry out measurements of its own.

It goes without saying that the features described above, and those which can be taken from the following detailed description of preferred embodiments cannot be used in the disclosed combination only, but also in other combinations, as will be apparent to those skilled in the art. With respect to the following description, it shows:
- Fig. 1: a diagrammatic view of a wireless communication network,
- Fig. 2: a diagrammatic view of a wireless terminal employed in the communication network of Fig. 1,
- Fig. 3: a flowchart schematically illustrating steps of the inventive method,
- Fig. 4: a timeline illustrating a first time interval for executing measurements, and
- Fig. 5: a second timeline illustrating second time intervals.

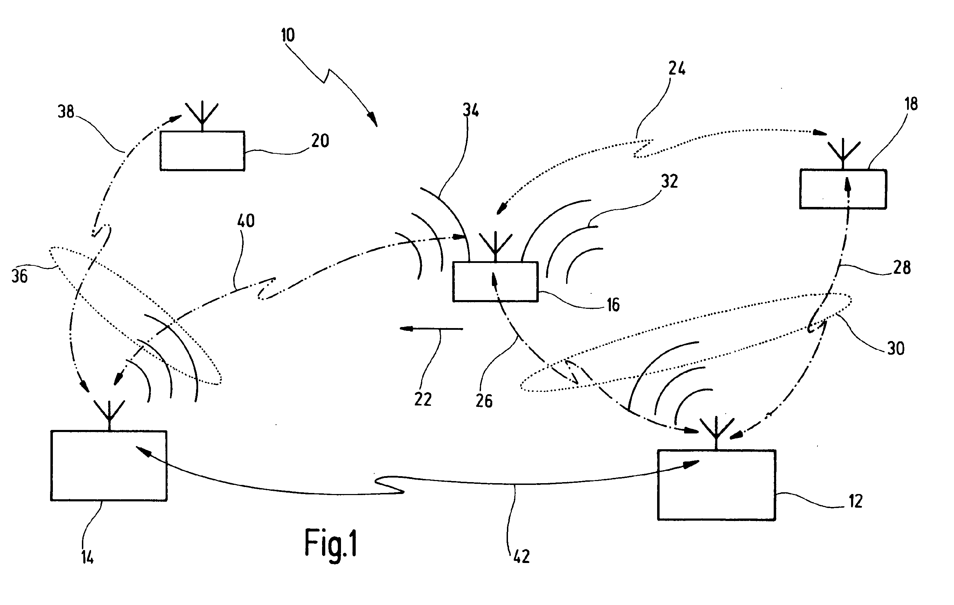

In Fig. 1, a wireless communication network is designated in its entirety by reference numeral 10.

For sake of simplicity, communication network 10 includes two access points 12 and 14, and a plurality of wireless terminals 16, 18, and 20. However, those skilled in the art will appreciate that a different number of access points 12, 14 and a different number of wireless terminals 16, 18, 20 can also be employed.

By way of non-limiting example, communication network 10 is a HIPERLAN network here. It might be installed in an airport area, or in an office building. It is assumed that wireless terminal 16 is moved around in the direction of arrow 22. During this movement, terminal 16 communicates with terminal 18 which is indicated by arrow 24. Arrow 24 is shown in dotted lines, since communication between different terminals usually takes place via access point 12 in HIPERLAN network 10, although a direct terminal-to-terminal communication is also possible. In the present case, it is assumed that communication between terminals 16 and 18 is established via access point 12 which is indicated by arrows 26 and 28. Each of the arrows mentioned, and those still to be mentioned, symbolize a communication path. Communication paths 26 and 28 belong to the same communication channel which is indicated by ellipse 30. For sake of illustration, radio signals transmitted across communication channel 30 are indicated by reference numeral 32.

Access point 14 operates with radio signals 34 having different signal frequencies. Radio signals 34 belong to communication channel 36, which provides a communication link between access point 14 and wireless terminal 20. A communication path is symbolized by arrow 38.

In operation, wireless terminal 16 receives messages from wireless terminal 18 via access point 12. According to the inventive method, terminal 16 additionally measures channel characteristics of the radio signals 34 transmitted from access point 14. If it is useful for terminal 16 to switch over to a communication link to access point 14, indicated by arrow 40, a handover procedure is initiated, as it is known per se to those skilled in the art. After the handover has taken place, wireless terminal 16 can still receive messages from terminal 18, but access point 14 is additionally involved in the communication link then. For this purpose, a communication path indicated by arrow 42 is established between access points 12 and 14.

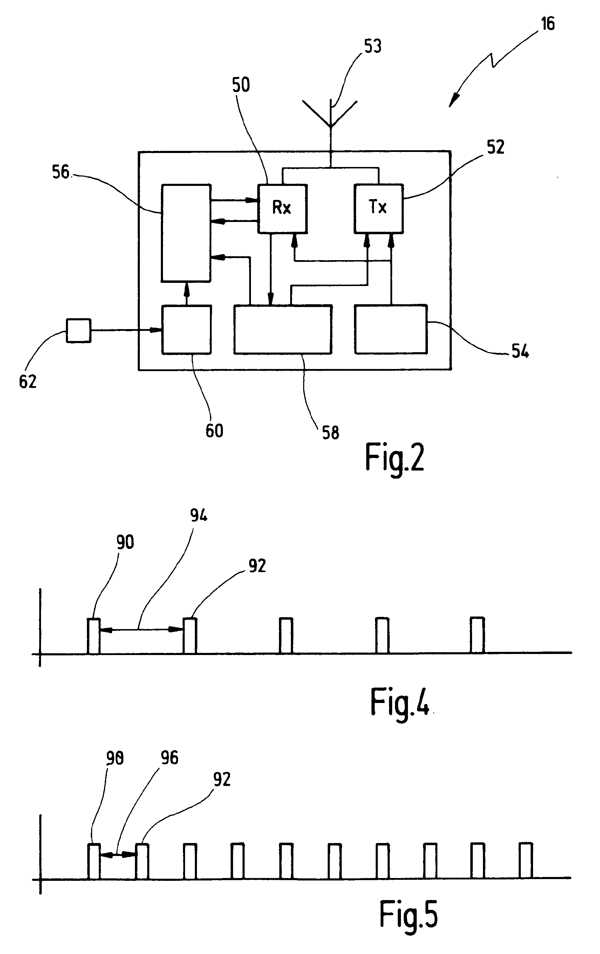

In Fig. 2, exemplary details of wireless terminal 16 are shown. Terminal 16 comprises a receiver 50 and a transmitter 52, both of which are connected to an antenna 53, as is known to those skilled in the art. A channel selector 54 is connected to both the receiver 50 and the transmitter 52. Channel selector 54 controls and selects the communication channel which terminal 16 operates across. Reference numeral 56 designates a receiver controller which controls the conflicting tasks of receiver 50, namely receiving messages on the one hand, and executing measurements on non-selected communication channels on the other. Reference numeral 58 designates a memory for storing user data which is to be transmitted by transmitter 52, or which has been received by receiver 50. The amount of user data as well as message signal strength indications derived from receiver 50 are reported to receiver controller 56.

Reference numeral 60 designates a memory for storing parameter values which can be set by a user of terminal 16 via user interface 62. In a simple but effective embodiment, a user can switch between two parameter values, namely "fixed" or "mobile" indicating the respective characteristic of terminal 16. The inputted parameter value is also reported to receiver controller 56.

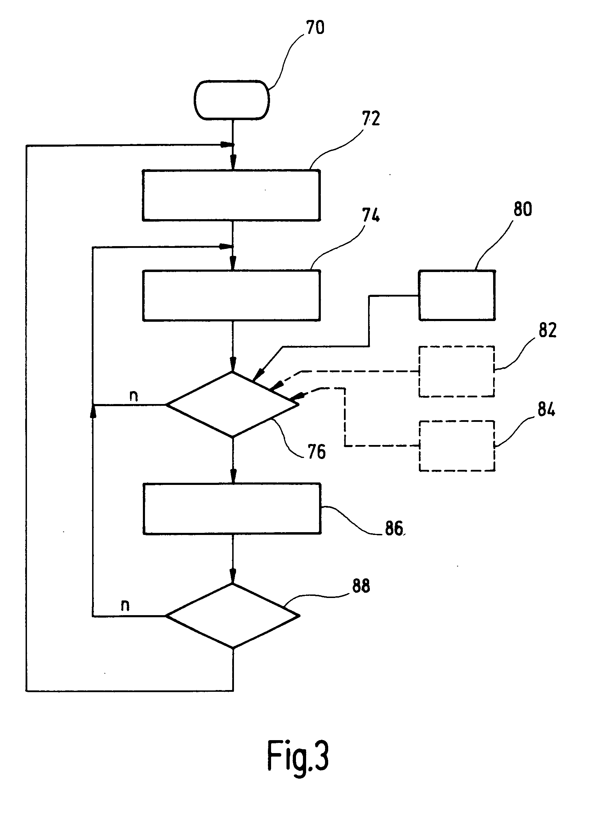

In Fig. 3, an entry portion of the procedure is designated by reference numeral 70. In step 72, terminal 16 establishes a communication link by selecting one wireless communication channel and logging on to the respective access point. In step 74, terminal 16 then transmits and receives messages across said selected communication channel. At predefined and fixed time intervals, for example at the end of each MAC (Medium Access Control) frame in a HIPERLAN network, a decision is made on whether or not a measurement of channel characteristics in non-selected communication channels should take place. The decision is indicated by step 76. As already indicated above, the decision can be based on a parameter value set by a user of terminal 16, which is indicated by step 80. Alternatively or in addition, a fading rate can be estimated, as indicated by step 82, and/or the amount of user data to be received by terminal 16 can be used as an additional parameter, as indicated by step 84. For estimating a fading rate according to step 82, a received signal strength is indicated by receiver 50. Big changes in the received signal strength are an indication of high mobility of terminal 16 leading to more frequent measurements in non-selected communication channels, as will be seen from the following.

If it is decided in step 76 that no measurements should take place for the moment, the procedure returns to step 74, i.e. to usual operation of terminal 16 with transmitting and receiving messages. On the other hand, if it is decided that measurements should take place, the procedure advances to step 86 where receiver 50 is switched to non-selected communication channels for making measurements of channel characteristics. In step 88, it is then decided whether or not the communication channel should be changed. If the decision is "no", the procedure returns again to step 74, and terminal 16 continues to receive and transmit messages. If the decision is "yes", the procedure returns to step 72, and establishes a new communication link on a previously non-selected communication channel.

Depending on the parameter values fed to the decision step 76 in Fig. 3, the frequency of measurements in non-selected communication channels is adapted to the mobility of terminal 16. If terminal 16 has a low or even no mobility, the time intervals between consecutive measurements can be chosen considerably long. Such a situation is indicated in Fig. 4 where time periods 90 and 92 indicate consecutive measurement activities. The time interval between measurement activities 90 and 92 is indicated by reference numeral 94.

In contrast, Fig. 5 shows a situation, where the time interval 96 between consecutive measurement activities is much lower due to a higher mobility of terminal 16. All in all, the frequency of measurements is thus optimized with respect to an efficient communication.

## Claims

1. Method for communicating messages within a wireless communication network having a plurality of wireless terminals (12 - 20), in particular a wireless LAN and more particularly a HIPERLAN network, said method comprising the steps of:
- providing a plurality of wireless communication channels (30, 36),
- selecting (72) one of said wireless communication channels (30) for transmitting said messages between at least two of said wireless terminals (16, 18),
- measuring (86) channel characteristics in non-selected ones (36) of said wireless communication channels in at least one (16) of said at least two wireless terminals (16, 18), and
- switching (88) to one of said non-selected communication channels (36) depending on said channel characteristics measured,
**characterized in that**
said step of measuring (86) is executed in variable time intervals (94, 96) depending on a mobility (22) of said at least one wireless terminal (16).

2. Method according to claim 1, **characterized in that** said step of measuring (86) is executed the more often the higher said mobility (22) is.

3. Method according to claim 1 or 2, **characterized in that** said time intervals (94, 96) are varied depending on a parameter value (60, 62; 80) that can be set by a user of said at least one wireless terminal (16).

4. Method according to any of claims 1 to 3, **characterized in that** said time intervals (94, 96) are varied depending on a fading rate (82) estimated by said at least one wireless terminal (16).

5. Method according to claim 4, **characterized in that** said fading rate is estimated by observing a signal strength of message signals received across the selected communication channel.

6. Method according to any of claims 1 to 5, **characterized in that** said time intervals (94, 96) are varied depending on an amount of user data (84) which is to be communicated by said at least one wireless terminal (16).

7. Method according to any of claims 1 to 6, **characterized in that** said step of switching (88) includes a change of a carrier frequency used.

8. Method according to any of claims 1 to 7, **characterized in that** said step of selecting (72) includes a selection of an access point (12, 14) for establishing said communication link, and said step of switching (88) includes a change of the access point (12, 14) selected.

9. Method according to any of claims 1 to 8, **characterized in that** said step of measuring is executed on an instruction issued by an access point.

10. Communication network, in particular wireless LAN and more particularly HIPERLAN communication network, having a plurality of wireless communication channels (30, 36) and a plurality of wireless terminals (12 - 20) each connected to at least one of said wireless communication channels (30, 36), wherein each wireless terminal (16) comprises a receiver (50) for receiving radio signals (32, 34), a transmitter (52) for transmitting radio signals (32, 34), and a channel selector (54) for selecting one of said wireless communication channels (30) to be connected with, wherein said receiver (50) is capable of measuring channel characteristics in non-selected ones (36) of said wireless communication channels, and wherein said channel selector (54) switches to a non-selected communication channel (36) depending on said channel characteristics measured, **characterized in that** each wireless terminal (16) further comprises a receiver controller (56) that controls said receiver (50) to measure said channel characteristics in variable time intervals (94, 96) depending on a mobility (22) of each respective wireless terminal (16).

11. Wireless terminal for use in a wireless communication network having a plurality of wireless communication channels (30, 36), in particular a wireless LAN and more particularly a HIPERLAN communication network, said terminal (16) comprising a receiver (50) for receiving radio signals (32, 34), a transmitter (52) for transmitting radio signals (32, 34), and a channel selector (54) for selecting a wireless communication channel (30) to be connected with, wherein said receiver (50) is capable of measuring channel characteristics in non-selected communication channels (36), and wherein said channel selector (54) switches to a non-selected communication channel (36) depending on said channel characteristics measured, **characterized in that** each wireless terminal (16) further comprises a receiver controller (56) that controls said receiver (50) to measure said channel characteristics in variable time intervals (94, 96) depending on a mobility (22) of each respective wireless terminal (16).

12. Microprocessor program product comprising program code means stored on a microprocessor readable medium for executing the steps of the method as defined in any of claims 1 to 9, when said program product is run on a microprocessor.
